# EUROPEAN PATENT APPLICATION

(11) **EP 2 684 853 A2**
(43) Date of publication of application: **15.01.2014**
(21) Application number: 13003482.0
(22) Date of filing: 10.07.2013
(51) Int. Cl.: C04B 14/06, C04B 28/04

(54) **Dry mortar mixture for preparing floor mortars and adhesive with stronger properties, by making use of recycled foundry sand as a superior component**

(30) Priority: 10.07.2012 CZ 201226374 U
(71) Applicant: Dykast, Robert, 19016 Praha 9 (CZ)
(72) Inventor: Dykast, Robert, 19016 Praha 9 (CZ)
(74) Representative: Danek, Vilém

(57) **Abstract**

Dry mortar mixture used to prepare fresh, allover, thin-layer mortar to improve its strength properties and providing better grip and less friability, wherein the mixture comprises 10 to 30 weight percent of overburned silica sand from foundries of a total weight of mixture. Such product has better qualitative properties, better cohesive properties and with greater dryness and a prolonged storage period is obtained.

## Description

### Technical Field

Dry mortar mixture used to prepare fresh, allover, thin-layer mortar to improve its strength properties and providing better grip and less friability.

### Background Art

Commonly used practice in the manufacture of building mixtures for floors or adhesives for masonry is the use of a binder made of common natural quartz sand, which is friable and its use as a binder must be compensated by addition of larger portion of cement and other binders.

The use mortar for flooring is a known method. In industrial plants, and even in the more loaded areas, however, the flooring eventually crumbles. In order to compensate friability of natural silica sand, various larger quantities of other ingredients are often added.

In the field of construction for use in the masonry mortar, where the grip must be maximized, raw silica sand seemed to be the best existing material for dry mortar mixes.

### Disclosure of the Invention

The solution lies in a dry mortar mix containing "recycled", by production overburned, foundry sand in a ratio of up to 30 percent of the total amount of the product.

Ingredients of the dry mortar: (% by weight)

| | |
|---|---|
| Portland cement | 60 to 80 wt% |
| Polysaccharide thickener | 0.2 to 0.1 wt% |
| Finely ground ingredients | 10 wt% |
| Means for storing water | 0 to 0.5 wt% |
| Organic fibers | 0 to 0.25 wt% |
| Recycling foundry sand | 10 to 30 wt% |

From the above dry mortar with a well-defined addition of water, we can create the masonry mortar and adhesive with greater adhesion and reduce its potential friability. Such a masonry mortar does not suffer from weathering, and floors made from these mixtures have improved walking properties.

Given the fact that the mortar contains overburned binder with constant fraction and stable chemical properties, and the product has a much better qualitative effects, it is convenient to produce and use such a dry mortar mix for the construction market.

### Further Description

Overburned waste sand treated by "recycling" process to the appropriate product (free from dangerous substances) is mechanically modified by sowing it to the desired grain size.

Thereby obtained material is then treated similarly as the natural one.

The grain distribution of recycled sands corresponds to the desired particle size distribution (see grading curve).

Its chemical composition does not exclude the use in construction field. It means that it does not contain harmful chemical substances that would prevent the use thereof.

An integral part of the utilization of the material is the product certification. This means that the competent authority declares that the chemical composition of the recycling material is suitable for use and it does not contain harmful substances.

### Example of Composition

Ingredients of the dry mortar: (% by weight)

| | |
|---|---|
| Portland cement | 79 wt% |
| Polysaccharide thickener | 0.2 wt% |
| Finely ground ingredients | 10 wt% |
| Means for storing water | 0.5 wt% |
| Organic fibers | 0.30 wt% |
| Recycling foundry sand | 10 wt% |

### Industrial Utilization

The final product has better qualitative properties, better cohesive properties and with greater dryness and a prolonged storage period is obtained. The floors made of the products manufactured according to this invention become brittle, and due to the content of small particles of iron they demonstrate greater strength.

Dried adhesives and masonry mortar used for walling of construction elements (like bricks) does not suffer from weathering.

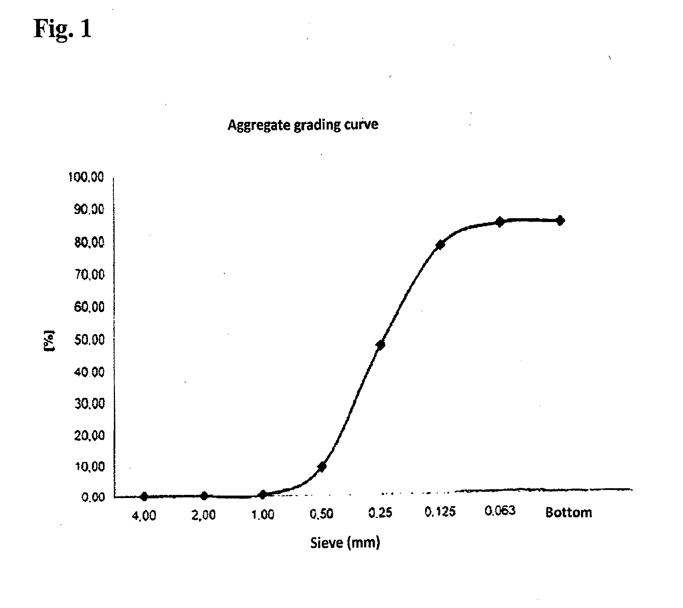

## Claims

1. A dry mortar mixture for masonry adhesives and pouring floors, **characterized in that** it comprises 10 to 30 weight percent of overburned silica sand from foundries of a total weight of mixture.
